# EUROPÄISCHE PATENTSCHRIFT

(11) **EP 0 499 658 B1**
(45) Veröffentlichungstag und Bekanntmachung des Hinweises auf die Patenterteilung: **14.12.1994**
(21) Anmeldenummer: 91102284.6
(22) Anmeldetag: 18.02.1991
(51) Int. Cl.: B60R 16/02

(54) **Elektrisches Bordnetz eines Kfz zur Stromversorgung von rückwärtigen Leuchten**
Electric network of a vehicle for rear light current supply
Réseau électrique d'un véhicule, pour l'alimentation en courant des feux arrières

(43) Veröffentlichungstag der Anmeldung: 26.08.1992
(73) Patentinhaber: SIEMENS AKTIENGESELLSCHAFT, 80333 München (DE)
(72) Erfinder: Glehr, Manfred, Dipl.-Ing., W-3170 Gifhorn (DE)

(56) Entgegenhaltungen:
- DE-A- 3 610 934
- DE-A- 3 724 916
- GB-A- 2 054 290
- GB-A- 2 059 693
- US-A- 3 697 767
- US-A- 3 719 372
- US-A- 3 943 489
- US-A- 4 183 599
- US-A- 4 575 673
- ELEKTRONIK, Band 37, Nr. 5, 4. März 1988, Seiten 102-104, München, DE; J. SCHICK: "Ein neues Kabelsystem für Fahrzeuge"

## Beschreibung

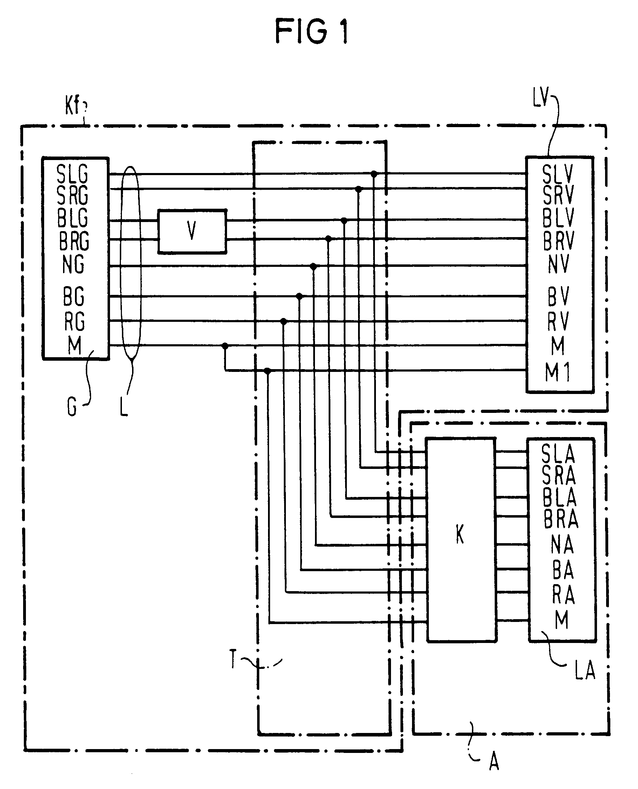

Die Erfindung geht von dem im Oberbegriff des Patentanspruches 1 definierten Gegenstand aus, welcher für sich durch die DE-A1-37 24 916 bekannt ist, und welcher im wesentlichen der Figur 1 der vorliegenden Schrift entspricht.

Diese Figur 1 zeigt schematisch Leitungen L des Bordnetzes sowie diverse im Kfz Kf angebrachte Geber G, welche die Schalter SLG bis RG enthalten. Diese Geber G steuern die Stromversorgung der rückwärtigen Leuchten LV des Kfz Kf, nämlich im allgemeinen getrennt voneinander diverse Leuchten SLV bis RV. Im gezeigten Beispiel steuern diese Geber G zusätzlich die entsprechenden rückwärtigen Leuchten LA in einem Anhänger A, welcher über eine elektrische Anhängerkupplung K und über einen im Kfz Kf angebrachten Verteiler T an das Bordnetz des - dann vorderen - Kfz Kf angeschlossen ist. Die Anhängerkupplung kann übrigens am Anhänger A oder am Kfz Kf oder auch zwischen diesen beiden angebracht sein.

Bei den Gebern handelt es sich um Schalter: Die Schalter SLG und SRG steuern die linken und rechten Schlußleuchten SLV, SRV, SLA und SRA des Kfz Kf und des Anhängers A. Die Schalter BLG und BRG steuern mittels des - im gezeigten Beispiel in der Einheit V untergebrachten - Blinkerrelais V, welches hier an sich gleichzeitig einen Leistungsverstärker darstellen kann, die rückwärtigen linken und rechten Blinkleuchten BLV, BRV, BLA und BRA des Kfz Kf und des Anhängers A. Der Schalter NG steuert z.B. Nebelschlußleuchten NV und NA des Kfz Kf und des Anhängers A. Der Schalter BG steuert die Bremsleuchten BV und BA des Kfz Kf und des Anhängers A. Der Schalter RG steuert die Rückfahrleuchten bzw. Rückfahrscheinwerfer RV und RA des Kfz Kf und des Anhängers A. Zusätzlich gibt es hier noch Leitungen für den Masseanschluß M, welcher z.B. der genormten Klemme 50 des Bordnetzes entspricht, sowie den zusätzlichen Masseanschluß M1, welcher z.B. der genormten Klemme 98 des Bordnetzes entspricht.

In der US 4,183,599 ist ein möglicher, sehr spezieller Aufbau einer Anhängerkupplung beschrieben. In der US 3,943,489 ist ein Zeitmultiplexverfahren zum Steuern einer Vielzahl von Einrichtungen beschrieben.

Ein Hauptproblem von Bordnetzen der Kfz mit Anhängern ist der oft recht hohe, von den Gebern zu schaltende Strom, z.B. jene Ströme, die von Gebern für die Bremsleuchten oder die Nebelschlußleuchten oder die Rückfahrleuchten zu schalten sind. Entsprechend problematisch sind die Lebensdauer und die Zuverlässigkeit dieser Geber, bzw. entsprechend aufwendig sind die Herstellung der Kontakte solcher Geber und die Reparaturen dieser Geber. Entsprechend dick und gewichtig müssen auch alle entsprechenden Teile der im allgemeinen aus Kupfer bestehenden Leitungen des Bordnetzes sein.

Die Aufgabe,
- den Aufwand für den - nachträglichen oder auch für den von vorne herein beabsichtigten - Anschluß des Bordnetzes des Anhängers an das Bordnetz des Kfz einschließlich des Aufwandes zur Einfügung der Halbleiterschalter besonders klein machen zu können,
- nämlich im Kfz einen erheblichen Aufwand für vorsorgliche Überdimensionierungen vermeiden zu können,
   ° also jenen Aufwand für Geber vermeiden zu können, damit eine ausreichende Belastungsfähigkeit dieser Geber für hohe zu schaltende Ströme auch dann zu erreicht ist, wenn nachträglich ein Anhänger angeschlossen werden sollte, besonders von auch von solchen seiner Geber, welche dann zusätzlich zu den rückwärtigen Leuchten des Kfz rückwärtige Leuchten des Anhängers - evtl. zusätzlich sonstige Leuchten des Anhängers - steuern sollten,
   ° auch den Aufwand für Dicke und Gewicht der Kupferleitungen des Bordnetzes zumindest stellenweise reduzieren zu können, besonders von auch von unmittelbar an jene Geber angeschlossenen Bordnetz-Leitungsabschnitte, welche - zusätzlich zu den rückwärtigen Leuchten des Kfz oder ausschließlich - rückwärtige Leuchten des Anhängers - evtl. zusätzlich sonstige Leuchten des Anhängers - mit Strom versorgen sollten,
   ° und auch den Aufwand an Raum und Gewicht für den Einbau von Leistungsverstärkern, die jeweils zwischen den Gebern und die betreffende rückwärtigen Leuchten einfügbar sind, niedrig zu halten,
- und auch den Aufwand für das Anbringen der Anhängerkupplung am betreffenden Kfz oder Anhänger - oder im Raume zwischen ihnen - besonders klein machen zu können,
   ° nämlich hierbei diesen elektrischen Anschluß mit wenig Aufwand an Raum, an Gewicht und an Arbeitsstunden alleine durch Einfügen einer kompakten Baueinheit zwischen die Bordnetze des Kfz und des Anhängers herstellen zu können, und zwar selbst wenn zunächst das Kfz als besonders aufwandsarme Grundausstattung noch keinen Anhänger vorsah und ein nachträgliches Austauschen bzw. nachträglich stärkeres Dimensionieren von im Kfz angebrachten Bauelementen wie z.B. das Austauschen seiner Geber vermieden werden soll,
   ° und überdies die in der Baueinheit angebrachten Halbleiterschalter relativ schwach dimensionieren können, weil diese Halbleiterschalter nur die elektrischen Leistungen der betreffenden Leuchten des Anhängers aushalten müssen,
wird erfindungsgemäß durch den im Patentanspruch 1 definierten Gegenstand gelöst.

Die in den Unteransprüchen definierten Gegenstände gestatten, zusätzliche Vorteile zu erreichen. U.a. gestatten nämlich die zusätzlichen Maßnahmen gemäß dem Patentanspruch
2, mittels eines im Kfz angebrachten Gebers und mittels der erfindungsgemäß aufgebauten Baueinheit auch sonstige Leuchten des Anhängers steuern zu können,
3, den Aufwand an Leitungen im Bordnetz des vorderen Kfz weiter verringern zu können,
4, Halbleiterschalter zu verwenden, welche zuverlässig rasch auch hohe Ströme einschalten und im durchgeschalteten Zustand niedrige Eigenverluste aufweisen, sowie
5, Halbleiterschalter zu verwenden, welche besonders zuverlässig rasch auch hohe Ströme schalten, dabei sehr kurzschlußfest sind und im durchgeschalteten Zustand besonders niedrige Eigenverluste und geringe Empfindlichkeit für Übertemperaturen aufweisen.

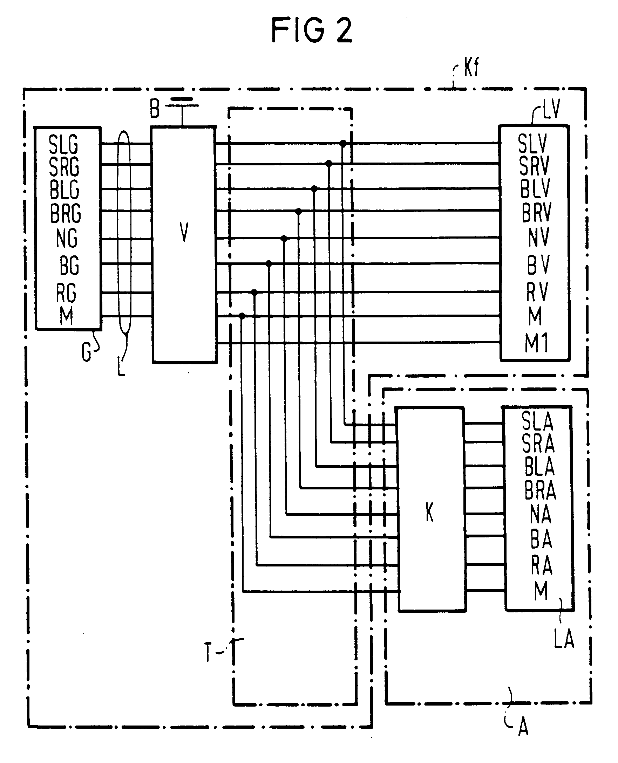

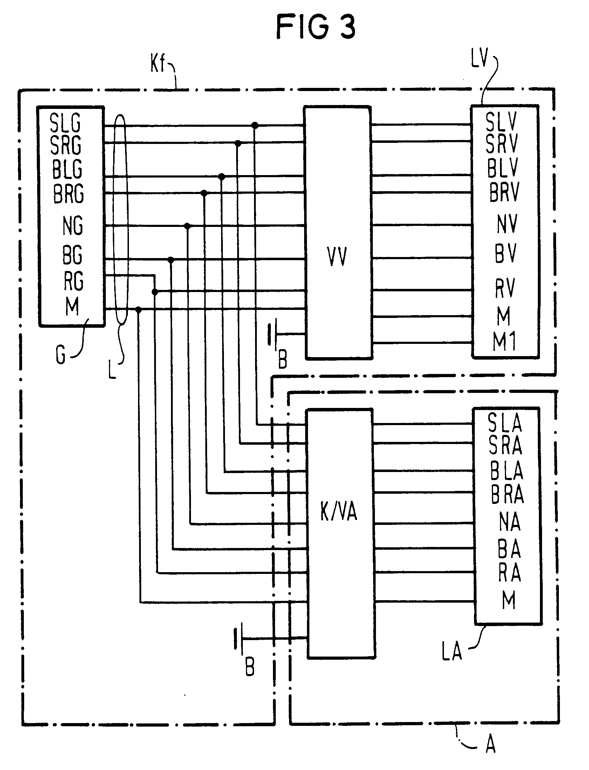

Die Erfindung und Weiterbildungen derselben werden anhand der in den Figuren 2 und 3 gezeigten Ausführungsbeispiele der Erfindung weiter erläutert, welche der Übersichtlichkeit wegen jeweils möglichst einfach dargestellt wurden. Dabei zeigt die Figur
2 ein Beispiel der Erfindung, bei welchem in alle - oder in zumindest einem Teil der - Leitungen des Bordnetzes des Kfz Halbleiterschalter als Leistungsverstärker eingefügt sind - evtl. zusätzlich noch Relais als Leistungsverstärker wie z.B. ein entsprechendes Blinkerrelais - ,
   wobei diese Leistungsverstärker zusätzlich automatische Steuerungen und logische Verknüpfungen enthalten können, - z.B. für ein automatisches Blinken zur Anzeige der Abbiegerichtungen, und/oder für ein gleichzeitiges Warnblinken links und rechts, sowie
3 ein anderes Beispiel der Erfindung, bei welchem in alle - oder in zumindest einem Teil der - Leitungen des Bordnetzes des vorderen Kfz und/oder in alle - oder in zumindest einem Teil der - Leitungen des Bordnetzes des Anhängers jeweils einer oder mehrere Halbleiterschalter als Leistungsverstärker eingefügt sind - evtl. zusätzlich noch ein oder mehrere Relais als Leistungsverstärker wie z.B. ein Blinkerrelais - ,
   wobei auch alle diese Leistungsverstärker zusätzlich automatische Steuerungen und logische Verknüpfungen enthalten können, z.B. für automatisches Blinken zur Anzeige der Abbiegerichtungen, für gleichzeitiges Warnblinken links und rechts, usw.

Die Figuren 2 und 3 sind der Figur 1 recht ähnlich. Durch die Verwendung von gleichen Hinweiszeichen in allen Figuren ist die Bedeutung des wichtigsten, in den Figuren 2 und 3 gezeigten Bauelemente klar. Deshalb braucht nun nur noch auf die in den Figuren 2 und 3 gezeigten, von der Figur 1 abweichenden Besonderheiten eingegangen zu werden.

Bei der Erfindung enthält das Kfz Kf zumindest für einen Teil der Leuchten des Kfz Kf, vgl. in den Figuren 2 und 3 SLV, SRV, BLV, BRV, NV, BV, RV - und/oder für die Leuchten des Anhängers A, vgl. SLA, SRA, BLA, BRA, NA, BA, RA - zumindest einen einzigen Leistungsverstärker, und zwar zumindest einen einzigen wenn nicht mehrere Halbleiterschalter als Leistungsverstärker. Diese Halbleiterschalter sind bei dem in der Figur 2 gezeigten Beispiel in einer eigenen Einheit V angebracht und bei dem in der Figur 3 gezeigten Beispiel im Kfz Kf und/oder im Anhänger A - vgl: die entsprechenden Einheiten VV und K/VA. Diese Halbleiterschalter bzw. Leistungsverstärker sind bei den gezeigten Beispielen in die betreffenden Leitungen L des Bordnetzes eingefügt, wobei das vom betreffenden Geber, vgl. SLG, SRG, BLG, BRG, NG, BG und RG, gelieferte Eingangssignal erheblich weniger elektrische Leistung aufweist als das Ausgangssignal dieses in V und/oder in VV und/oder in K/VA angebrachten Halbleiterschalters. Vgl. damit auch den in den Figuren 2 und 3 gezeigten Anschluß der Einheiten V bzw. VV bzw. K/VA an die Bordnetzbatterie B. - Diese Halbleiterschalter der Erfindung können aber auch, statt zu Einheiten V bzw. VV bzw. KVA räumlich zusammengefaßt zu werden, auch verstreut über das Kfz Kf und verstreut über den Anhänger A angebracht sein.

Daneben kann die Erfindung auch noch andersartige Leistungsverstärker, z.B. Relais als Leistungsverstärker enthalten. Die Erfindung kann zusätzlich Leitungen L ohne jegliche Leistungsverstärker enthalten. Wesentlich ist bei der Erfindung, daß zumindest in eine Leitung L des Bordnetzes - im vorderen Kfz Kf und/oder im Anhänger A und/oder zwischen ihnen, also dann zwischen Kf und A - zwischen einem im Kfz angebrachten Geber und einer rückwärtigen Leuchte des Kfz Kf und/oder des Anhängers A zumindest ein einziger Halbleiterschalter als Leistungsverstärker eingefügt ist, wobei das vom betreffenden Geber gelieferte Eingangssignal dieses Halbleiterschalters erheblich weniger elektrische Leistung aufweist als das Ausgangssignal dieses Halbleiterschalters.

Die Erfindung löst durch die Einfügung eines oder mehrerer Halbleiterschalter als Leistungsverstärker das oben genannte Hauptproblem solcher Bordnetze, nämlich zumindest in einem Teil der Geber und zumindest in einem Teil der entsprechenden Abschnitte von Bordnetzleitungen die oft recht hohen, von den Gebern zu schaltenden Ströme vermeiden zu können. Dies ist erfindungsgemäß z.B. auch dann möglich, wenn der betreffende Geber die Stromversorgung der Bremsleuchten oder der Nebelschlußleuchte oder der Rückfahrleuchten zu schalten hat.

Weil nämlich bei der Erfindung nur noch vergleichsweise schwache Ströme zwischen den betreffenden Schaltern der, Geber und den erfindungsgemäß eingefügten Halbleiterschaltern fließen, kann man bei der Erfindung im Vergleich zum Stande der Technik die betreffenden, nun nur noch schwache Ströme schaltenden Schalter der Geber schwächer dimensionieren bzw. die Belastbarkeit, die Lebensdauer und die Zuverlässigkeit dieser Geber sind bei der Erfindung weniger problematisch, so daß entsprechend entsprechend einfachere Geber, bzw. weniger Aufwand für die Herstellung der Kontakte solcher Schalter bzw. Geber nötig sind. Überdies kann man bei der Erfindung die betreffenden Leitungsabschnitte des Bordnetzes zwischen den Gebern und den Halbleiterschaltern aus dünneren Leitungen als beim Stande der Technik herstellen. Auch allfällige Reparaturen dieser Schalter bzw. Geber und Leitungsabschnitte erfordern weniger Materialaufwand. Außerdem kann man bei der Erfindung auch dann mit einem geringen Aufwand besonders an Raum und Gewicht für erfindungsgemäß eingefügten Leistungsverstärker auskommen.

Man kann die Erfindung auch zur Stromversorgung von rückwärtigen Leuchten, vgl. SLA, SRA, BLA, BRA, BA in den Figuren 2 und 3, eines Anhängers A des Kfz Kf benutzen, evtl. zusätzlich zur Stromversorgung von sonstigen Leuchten dieses Anhängers A, z.B. von dessen Innenraumbeleuchtung. Es kann nämlich zumindest einer der Leistungsverstärker, welche rückwärtige Leuchten LA des Anhängers A steuern sollen, ein erfindungsgemäß eingefügter Halbleiterschalter sein, dessen Eingangssignal, welches vom betreffenden, im vorderen Kfz Kf angebrachten Geber geliefert wird, erheblich weniger elektrische Leistung aufweist als das Ausgangssignal dieses Halbleiterschalters. Man kann also in der Grundausstattung des Kfz mit besonders wenig Aufwand an Raum und Gewicht vorsorgliche starke Überdimensionierungen der betreffenden, im vorderen Kfz Kf angebrachten Geber G vermeiden, um eine ausreichende Belastungsfähigkeit dieser Geber auch dann zu gewährleisten, falls nachträglich ein Anhänger A an das Kfz Kf angehängt werden soll. Dann werden die vorsorglichen Überdimensionierungen auch von weiteren Gebern G vermeidbar, welche später sonstige Leuchten des Anhängers A steuern sollen wie z.B. dessen Innenraumbeleuchtung.

Bei dieser erfindungsgemäßen, über Halbleiterschalter erreichten Stromversorgung kann es sich also bei den im vorderen Kfz Kf angebrachten Gebern z.B. um die Schalter SLG, SRG für die linken und rechten Schlußlichter SLA und SRA des Anhängers A handeln, um die Schalter BLG und BRG zur Anzeige der linken und rechten Abbiegerichtung mittels der linken und rechten Blinkleuchten BLA und BRA des Anhängers A, um den Schalter NG zur Steuerung der rückwärtigen Nebelschlußleuchte NA des Anhängers A, um den Schalter BG zur Anzeige der Bremsenbetätigung mittels der Bremsleuchten BA des Anhängers A, und um den Schalter RG zur Steuerung der Rückfahrleuchten RA des Anhängers A. Zumindest ein Teil dieser rückwärtigen Leuchten SLA, SRA, BLA, BRA, NA, BA, RA des Anhängers A wird also erfindungsgemäß über zumindest einen einzigen, gemäß Figur 2 z.B. in der Einheit V oder gemäß Figur 3 z.B. in der Einheit K/VA angebrachten Halbleiterschalter als Leistungsverstärker gesteuert, wobei die Einheit K/VA im vorderen Kfz Kf oder auch im Anhänger A angebracht werden kann, vgl. die Figur 3 - dann werden also durch die Leitungen L von den Gebern G zu der Einheit K/VA nur niedrige Leistungen zu übertragen sein, also dort entsprechend dünne Leitungen L verwendbar sein.

Wenn man über die im vorderen Kfz Kf angebrachten Geber G die betreffenden Leuchten LA des Anhängers A steuert, kann man überdies die Anhängerkupplung, vgl. K in der Figur 1, zusammen mit jenen die Leistungsverstärker darstellenden Halbleiterschaltern in einer gemeinsamen Baueinheit, vgl. K/VA in der Figur 3, anbringen. Die Halbleiterschalter,
° welche alleine jene betreffenden rückwärtigen Leuchten, vgl. in der Figur 3 SLA, SRA, BLA, BRA, NA, BA, RA, des Anhängers A, aber nicht die entsprechenden rückwärtigen Leuchten, vgl. in der Figur 3 SLV, SRV, BLV, BRV, NV, BV, RV, des vorderen Kfz Kf beliefern, und
° welche von den betreffenden, im vorderen Kfz Kf angebrachten Gebern gesteuert werden, vgl. SLG, SRG, BLG, BRG, NG, BG, RG,
bilden dann also eine gemeinsame Baueinheit K/VA mit der elektrischen Anhängerkupplung, wobei diese Baueinheit als wahlweise - bei Bedarf auch nachträgliche - Ausstattung am Bordnetz des vorderen Kfz Kf angeschlossen werden kann, - wobei diese Baueinheit K/VA entweder am Anhänger A oder am vorderen Kfz Kf oder im Raume zwischen Dem Kfz und dem Anhänger A angebracht bzw. befestigt werden kann.

Durch diese zuletzt genannte Weiterbildung der Erfindung, welche die gemeinsame Baueinheit K/VA aufweist, kann man gleichzeitig eine ganze Reihe von Vorteilen erreichen:

Diese Weiterbildung gestattet nicht nur, alleine durch die Einfügung der gemeinsamen Baueinheit zwischen die Bordnetze des vorderen Kfz und des Anhängers, also mit besonders kleinem Aufwand an Raum und an Gewicht und an Arbeitsstunden, die Anhängerkupplung und die zusätzlichen, die Signalleuchten des Anhängers beliefernden Leistungsverstärker einzubauen.

Diese Einfügung der gemeinsamen Baueinheit K/VA ist nämlich auch dann schon möglich, wenn zunächst das vordere Kfz als besonders aufwandsarme Grundausstattung noch keinen Anhänger vorsah, - selbst bei einem nachträglichen Einbau dieser Baueinheit ist es nämlich nicht mehr nötig, nachträglich im vorderen Kfz Kf zusätzlich Bauelemente wie Geber und Leistungsverstärker und Leitungen des Bordnetzes auszutauschen bzw. nachträglich stärker zu dimensionieren.

Überdies können durch diese Weiterbildung vorsorgliche Überdimensionierungen von im vorderen Kfz angebrachten Bauelementen vermieden werden, wie z.B. Überdimensionierungen der betreffenden, im vorderen Kfz angebrachten Geber und Leistungsverstärker, vgl. z.B. G und V in der Figur 2, um bei Bedarf später leichter einen Anhänger A anschließen zu können-. Dabei können überdies die in der Baueinheit K/VA angebrachten Halbleiterschalter für sich betrachtet relativ schwach dimensioniert werden, weil sie nämlich nur die maximalen elektrischen Leistungen der betreffenden, ihnen jeweils zugeordneten Leuchten LA des Anhängers A aushalten müssen.

Den Aufwand an Leitungen L im Bordnetz des vorderen Kfz kann man auch dadurch noch weiter verringern, daß man zumindest ein Teil der elektrischen Verbindungen bzw. Leitungen L zwischen einerseits den Gebern, vgl. G bzw. SLG, SRG, BLG, BRG, NG, BG, RG in den Figuren 2 und 3, und andererseits den Halbleiterschaltern in V und/oder in VV und/oder in K/VA, durch die Zeitschlitze eines Zeitmultiplexbusses ersetzt.

Übrigens gelten die obigen Darlegungen über den Aufbau, die Wirkungen und die Vorteile der Erfindung im Prinzip - mutatis mutandis - auch dann, wenn man als Leitungen L zwischen den betreffenden Gebern G und Halbleiterschaltern jeweils Glasfasern L statt metallischen Leitungen L, also z.B. statt Kupferleitungen L, verwendet.

Die Erfindung gestattet, verschiedene Arten von Halbleiterschaltern als Leistungsverstärker zu verwenden. So kann man nicht nur bipolare Transistoren, sondern z.B. auch Thyristoren für zumindest einen Teil der Halbleiterschalter in V und/oder in VV und/oder in K/VA verwenden, welche zuverlässig rasch auch hohe Ströme einschalten können und im durchgeschal-teten Zustand niedrige Eigenverluste aufweisen. Man kann z.B. auch SIPMOS-Transistoren zumindest für einen Teil der Halbleiterschalter in V, VV, K/VA verwenden, welche besonders zuverlässig rasch auch hohe Ströme schalten, sehr kurzschluß-fest sind und im durchgeschalteten Zustand besonders niedrige Eigenverluste und geringe Empfindlichkeit für Übertemperaturen aufweisen.

## Patentansprüche

1. Elektrisches Bordnetz eines Kraftfahrzeugs mit Anhänger (A), wobei
- das Bordnetz zur - ausschließlichen oder zusätzlichen - Stromversorgung von rückwärtigen Leuchten (SLA, SRA, BLA, BRA, NA, BA, RA) des Anhängers über eine elektrische Anhängerkupplung (K) dient,
z.B. von rückwärtigen Signalleuchten (SLA, SRA, BLA, BRA, BA) des Anhängers,
- die Stromversorgung von zumindest einem Teil der rückwärtigen Leuchten des Anhängers durch im Kraftfahrzeug angebrachte Geber (SLG, SRG, BLG, BRG, NG, BG, RG) gesteuert wird,
z.B. durch im Kraftfahrzeug angebrachte Schalter (BLG, BRG) zur Anzeige der Abbiegerichtung und Schalter (BG) zur Anzeige der Bremsenbetätigung,
- und zumindest ein Teil der rückwärtigen Leuchten (SLA, SRA, BLA, BRA, NA, BA, RA) des Anhängers (A) zumindest über einen einzigen, durch einen Halbleiterschalter gebildeten Leistungsverstärker (in V, VV, K/VA) gesteuert wird, dessen vom betreffenden Geber (SLG, SRG, BLG, BRG, NG, BG, RG) geliefertes Eingangssignal erheblich weniger elektrische Leistung aufweist als das Ausgangssignal dieses Halbleiterschalters,
**dadurch gekennzeichnet,** daß
- die Anhängerkupplung (K) zusammen mit den betreffenden Halbleiterschaltern,
° welche alleine jene betreffenden rückwärtigen Leuchten des Anhängers, aber nicht die entsprechenden rückwärtigen Leuchten des Kraftfahrzeugs beliefern, und
° welche von den betreffenden im Kraftfahrzeug angebrachten Gebern gesteuert werden,
eine gemeinsame Baueinheit (K/VA) bilden, welche - bei Bedarf auch nachträglich - am Bordnetz des Kraftfahrzeugs angeschlossen werden kann.

2. Bordnetz nach Patentanspruch 1,
**dadurch gekennzeichnet,** daß
- ein Geber des Kraftfahrzeugs einen Leistungsverstärker für die Stromversorgung der Innenraumbeleuchtung des Anhängers steuert.

3. Bordnetz nach einem der vorhergehenden Patentansprüche,
**dadurch gekennzeichnet,** daß
- zumindest ein Teil der elektrischen Verbindungen (L) zwischen den Gebern (SLG, SRG, BLG, BRG, NG, BG, RG) und den Halbleiterschaltern (in V, VV, K/VA) durch die Zeitschlitze eines Zeitmultiplexbusses gebildet wird.

4. Bordnetz nach einem der vorhergehenden Patentansprüche,
**dadurch gekennzeichnet,** daß
- zumindest ein Teil der Halbleiterschalter (in V, VV, K/VA) durch Thyristoren gebildet wird.

5. Bordnetz nach einem der vorhergehenden Patentansprüche,
**dadurch gekennzeichnet,** daß
- zumindest ein Teil der Halbleiterschalter (in V, VV, K/VA) durch SIPMOS-Transistoren gebildet wird.

## Claims

1. Electrical network of a motor vehicle (Kf) with trailer (A), wherein
- the network is used for the - exclusive or additional - power supply of rear lamps (SLA, SRA, BLA, BRA, NA, BA, RA) of the trailer via an electrical trailer coupling (K), for example of rear signal lamps (SLA, SRA, BLA, BRA, BA) of the trailer,
- the power supply of at least some of the rear lamps of the trailer is controlled by transmitters (SLG, SRG, BLG, BRG, NG, BG, RG) mounted in the motor vehicle, for example by means of switches (BLG, BRG) mounted in the motor vehicle for indicating the direction of turning and switches (BG) for indicating actuation of the brakes,
- and at least some of the rear lamps (SLA, SRA, BLA, BRA, NA, BA, RA) of the trailer (A) are controlled at least via a single power amplifier (in V, VV, K/VA) formed by semiconductor switch, the input signal of which, which is supplied by the relevant transmitter (SLG, SRG, BLG, BRG, NG, BG, RG) exhibits considerably less electrical power than the output signal of said semiconductor switch,
characterized in that
- the trailer coupling (K), together with the relevant semiconductor switches,
° which alone feed those relevant rear lamps of the trailer but not the corresponding rear lamps of the motor vehicle, and
° which are controlled by the relevant transmitters mounted in the motor vehicle,
form a common constructional unit (K/VA) which can be connected to the network of the motor vehicle - if necessary also subsequently.

2. Network according to Claim 1, characterized in that
- a transmitter of the motor vehicle controls a power amplifier for the power supply to the inside illumination of the trailer.

3. Network according to one of the preceding claims, characterized in that
- at least some of the electrical connections (L) between the transmitters (SLG, SRG, BLG, BRG, NG, BG, RG) and semiconductor switches (in V, VV, K/VA) are formed by the time slots of a time-division multiplex bus.

4. Network according to one of the preceding claims, characterized in that
- at least some of the semiconductor switches (in V, VV, K/VA) are formed by thyristors.

5. Network according to one of the preceding claims, characterized in that
- at least some of the semiconductor switches (in V, VV, K/VA) are formed by SIPMOS transistors.

## Revendications

1. Réseau électrique de bord d'un véhicule automobile (Kf) à remorque (A), dans lequel
- le réseau de bord sert à réaliser l'alimentation en courant - exclusive ou supplémentaire - de feux arrière (SLA,SRA,BLA,BRA,NA,BA,RA) de la remorque par l'intermédiaire d'un accouplement électrique (K) de la remorque,
par exemple de feux de signalisation arrière (SLA,SRA, BLA,BRA,BA) de la remorque,
- l'alimentation en courant d'au moins une partie des feux arrière de la remorque est commandée par des transmetteurs (SLG,SRG,BLG,BRG,NG,BG,RG) disposés dans le véhicule automobile,
par exemple par des interrupteurs (BLG,BRG) montés dans le véhicule automobile, pour l'affichage du changement de direction et des interrupteurs (BG) pour l'indication d'actionnement des freins, et
- au moins une partie des feux arrière (SLA,SRA,BLA,BRA,NA, BA,RA) de la remorque (A) est commandée au moins par l'intermédiaire d'un seul amplificateur de puissance (dans V, VV, K/VA), formé par un interrupteur à semiconducteurs et dont le signal d'entrée, qui est délivré par le transmetteur concerné (SLG,SRG,BLG,BRG,NG,BG,RG) possède une puissance électrique nettement inférieure à celle du signal de sortie de cet interrupteur à semiconducteurs,
caractérisé par le fait que
- l'accouplement (K) de la remorque forme, conjointement avec les interrupteurs à semiconducteurs considérés
° qui alimentent seuls les feux arrière considérés de la remorque, mais pas les feux arrière correspondants du véhicule automobile, et
° qui sont commandés par les transmetteurs considérés situés dans le véhicule automobile,
une unité de construction commune (K/VA), qui peut être raccordée au réseau de bord du véhicule automobile - également ultérieurement le cas échéant.

2. Réseau de bord suivant la revendication 1, caractérisé par le fait que
- un transmetteur du véhicule automobile commande un amplificateur de puissance pour l'alimentation en courant de l'éclairage de l'espace intérieur de la remorque

3. Réseau de bord suivant l'une des revendications précédentes, caractérisé par le fait que
- au moins une partie des liaisons électriques (L) entre les transmetteurs (SLG,SRG,SLG,BRG,NG,BG,RG) et les interrupteurs à semiconducteurs (dans V, VV, K/VA) est formée au moyen des créneaux temporels d'un bus à multiplexage temporel.

4. Réseau de bord suivant l'une des revendications précédentes, caractérisé par le fait que
- au moins une partie des interrupteurs à semiconducteurs (dans V, VV, K/VA) sont formés par des thyristors.

5. Réseau de bord suivant l'une des revendications précédentes, caractérisé par le fait que
- au moins une partie des interrupteurs à semiconducteurs (dans V,VV,K/VA) sont formés par des transistors SIPMOS.
